# NEUE EUROPÄISCHE PATENTSCHRIFT

(11) **EP 2 980 379 B2**
(45) Veröffentlichungstag und Bekanntmachung des Hinweises auf die Entscheidung über den Einspruch: **22.05.2019**
(45) Hinweis auf die Patenterteilung: 05.10.2016
(21) Anmeldenummer: 15172830.0
(22) Anmeldetag: 19.06.2015
(51) Int. Cl.: F01N 3/20, F01N 13/08, F01N 13/18, F01N 3/28

(54) **INJEKTIONSEINRICHTUNG UND ZUGEHÖRIGES HERSTELLUNGSVERFAHREN**
INJECTION DEVICE AND METHOD OF MANUFACTURING THE SAME
DISPOSITIF D'INJECTION ET PROCEDE DE FABRICATION ASSOCIE

(30) Priorität: 31.07.2014 DE 102014215084
(43) Veröffentlichungstag der Anmeldung: 03.02.2016
(73) Patentinhaber: Eberspächer Exhaust Technology GmbH & Co. KG, 66539 Neunkirchen (DE)
(72) Erfinder: Kobe, Jürgen, 72622 Nürtingen-Raidwangen (DE); Berkemer, Frank, 72800 Eningen u.A. (DE); Klausa, Konrad, 73779 Deizisau (DE); Binder, David, 78713 Schramberg (DE); Hackländer, Felix, 73733 Esslingen (DE)
(74) Vertreter: Ruttensperger Lachnit Trossin Gomoll

(56) Entgegenhaltungen:
- DE-A1-102007 048 560
- DE-A1-102010 049 018
- DE-U1-202008 001 547
- FR-A- 1 327 284

## Beschreibung

Die vorliegende Erfindung betrifft eine Injektionseinrichtung zum Einbringen eines Reduktionsmittels in einen Abgasstrom einer Abgasanlage einer Brennkraftmaschine.

Das Einbringen eines Reduktionsmittels in einen Abgasstrom einer Abgasanlage kommt vor allem bei sogenannten SCR-Systemen in Betracht, wobei SCR für Selective Catalytic Reduction steht. Als Reduktionsmittel kommt dabei regelmäßig ein flüssiges Reduktionsmittel in Betracht, nämlich vorzugsweise eine wässrige Harnstofflösung. Im Abgasstrom verdampft das Reduktionsmittel und kann durch Thermolyse und anschließende Hydrolyse zu Ammoniak und Kohlendioxid reagieren. In einem SCR-Katalysator können dadurch Stickoxide zu Stickstoff und Wasser reduziert werden.

Eine zum Einbringen des Reduktionsmittels in den Abgasstrom geeignete Injektionseinrichtung umfasst üblicherweise ein Abgasrohr zum Führen des Abgasstroms, das in einer Wand eine Stutzenöffnung aufweist, sowie einen Stutzen, der mit einem inneren Ende an die Stutzenöffnung angeschlossen ist und der an einem äußeren Ende zum Anschließen eines Injektors vorgesehen ist. Der Injektor kann dann durch den Stutzen hindurch und durch die Stutzenöffnung hindurch das Reduktionsmittel in den im Abgasrohr geführten Abgasstrom eindüsen. Dies ist aus DE 102010049018 bekannt.

Das dichte Anschließen des Stutzens an das Abgasrohr ist vergleichsweise aufwändig, da das Abgasrohr üblicherweise einen runden Querschnitt besitzt. Ferner wird der Stutzen bevorzugt nicht senkrecht bzw. lotrecht zu einer Außenseite der Wand des Abgasrohrs angeschlossen, sondern gegenüber der Lotrichtung geneigt. Hierdurch gestaltet sich der geometrische Übergang zwischen dem regelmäßig mit einem runden Querschnitt versehenen Abgasrohr und dem regelmäßig mit einem runden Querschnitt versehenen Stutzen vergleichsweise komplex. Die Herstellung einer derartigen Injektionseinrichtung ist dadurch vergleichsweise aufwändig. Insbesondere ist ein relativ großer Flansch am inneren Ende des Stutzens erforderlich, um diesen an der Außenseite des Abgasrohrs anschweißen zu können. Wird jedoch der Stutzen integral mit dem Flansch als Gußteil hergestellt, erhält der Stutzen eine relativ große thermische Masse. Hierdurch kann der Stutzen im Betrieb der Abgasanlage relativ viel Wärme aufnehmen und an sein äußeres Ende leiten und dort an den Injektor übertragen. Da der Injektor vergleichsweise hitzeempfindlich ist, kann eine hohe thermische Masse des Stutzens zu einer Beschädigung oder Zerstörung des Injektors führen.

Alternativ ist beispielsweise die Verwendung eines separaten Adapters denkbar, der einerseits den Flansch aufweist und an die Geometrie der Außenseite des Abgasrohrs angepasst ist und der andererseits an die Geometrie des inneren Endes des Stutzens angepasst ist. Der Adapter kann dann vergleichsweise einfach einerseits mit dem Stutzen und andererseits mit dem Abgasrohr verschweißt oder verlötet werden. Hierdurch lässt sich der Stutzen mit einer deutlich reduzierten Wandstärke realisieren, was dessen thermische Masse reduziert. Allerdings ist dieser Herstellungsvorgang aufgrund der erhöhten Teilanzahl vergleichsweise aufwändig, da relativ viele Arbeitsschritte und Bauteile erforderlich sind.

Die vorliegende Erfindung beschäftigt sich mit dem Problem, für eine Injektionseinrichtung der vorstehend genannten Art eine verbesserte Ausführungsform anzugeben, die sich insbesondere durch reduzierte Herstellungskosten auszeichnet.

Dieses Problem wird erfindungsgemäß durch die Injektionseinrichtung gemäß Anspruch 1 gelöst. Vorteilhafte Ausführungsformen sind Gegenstand der abhängigen Ansprüche.

Die Erfindung beruht auf dem allgemeinen Gedanken, den Stutzen an seinem inneren Ende mit einem seitlich abstehenden, in der Umfangsrichtung des Stutzens vollständig umlaufenden Kragen auszustatten, der an einer Innenseite der Wand des Abgasrohrs im Bereich eines die Stutzenöffnung einfassenden Öffnungsrands zur Anlage kommt. Ferner wird vorgeschlagen, den Stutzen im Bereich seines Kragens mit dem Abgasrohr zu verschweißen. Das integrale Ausformen des Kragens am Stutzen führt zu einem materialeinheitlichen, einstückigen Bauteil. Der Kragen kann beispielsweise durch plastische Umformung am Stutzen ausgeformt sein. Ebenso kann es sich um ein einstückiges, integrales Gußteil handeln. Somit sind letztlich nur zwei Bauteile erforderlich, nämlich der Stutzen mit Kragen und das Abgasrohr, die gefügt werden müssen. Die Positionierung des Kragens an der Innenseite der Wand des Abgasrohrs ist dabei von entscheidender Bedeutung, da Druckbelastungen, die im Inneren des Abgasrohrs auftreten, über den Kragen auf den Öffnungsrand und somit als Drucckräfte am Abgasrohr abgestützt werden können. Derartige Druckkräfte belasten somit die Schweißverbindung zwischen Kragen und Abgasrohr nicht oder nur unwesentlich, so dass hier dauerhaft eine stabile und dichte Verbindung zwischen Stutzen und Abgasrohr geschaffen werden kann. Durch den erfindungsgemäßen Vorschlag ist außerdem grundsätzlich nur eine einzige Schweißverbindung zwischen Stutzen und Abgasrohr erforderlich, um den Stutzen am Abgasrohr zu befestigen. Entscheidend ist jedoch, dass der Kragen, der einen innenliegenden Flansch repräsentiert, relativ klein dimensioniert werden kann, so dass letztlich die thermische Masse des Stutzens mit Kragen soweit reduziert ist, dass die Gefahr einer Beschädigung des Injektors durch Überhitzung im Betrieb der Abgasanlage verringert ist. Insgesamt wird somit eine preiswert herstellbare Injektionseinrichtung vorgestellt. Ebenso lässt sich das Verfahren zum Herstellen dieser Injektionseinrichtung vergleichsweise preiswert realisieren.

Der Kragen lässt sich besonders einfach so herstellen, dass er hinsichtlich seiner Geometrie komplementär zur Innenseite der Wand im Bereich des Öffnungsrands geformt ist. Auf diese Weise lässt sich besonders einfach eine großflächige Abstützung des Kragens an der Innenseite der Wand erzeugen.

Entsprechend einer vorteilhaften Ausführungsform kann der Kragen mittels einer am Kragen geschlossen umlaufenden Schweißnaht mit der Wand verschweißt sein, wobei sich die Schweißnaht an der Innenseite der Wand befindet. Insbesondere bei komplementär zur Innenseite der Wand geformten Kragen lässt sich die Schweißnaht auf diese Weise besonders einfach herstellen, um eine hinreichende Festigkeit und ausreichende Dichtigkeit zu erzeugen.

Das Abgasrohr ist aus einer ersten Schale und einer zweiten Schale zusammengebaut, wobei sich die beiden Schalen jeweils von einem Eintrittsende des Abgasrohrs bis zu einem Austrittsende des Abgasrohrs erstrecken. Dabei enthält nur die erste Schale die Stutzenöffnung, und der Stutzen ist nur mit der ersten Schale verschweißt. Durch die zweischalige Bauweise des Abgasrohrs ist es insbesondere möglich, den Stutzen bei noch nicht zusammengebautem Abgasrohr an der ersten Schale zu montieren und damit zu verschweißen. Solange die zweite Schale nicht an der ersten Schale montiert ist, ist das Abgasrohr über seine gesamte Länge offen, wodurch seine Innenseite besonders gut zugänglich ist, um den Stutzen in die Stutzenöffnung einzusetzen und um den Kragen mit der Wand des Abgasrohrs zu verschweißen. Obwohl durch die Mehrteiligkeit des Abgasrohrs mehrere Einzelteile vorhanden sind, ergibt sich insgesamt eine verbesserte Herstellbarkeit, da sich beispielsweise der Stutzen einfacher von innen durch die Stutzenöffnung einführen lässt.

Bei einer Ausführungsform kann in das Abgasrohr im Bereich eines Austrittsendes des Abgasrohrs ein statischer Mischer eingesetzt sein. Ein derartiger statischer Mischer ist so ausgestaltet, dass er zum einen eine Verdampfung des gegebenenfalls flüssig eingebrachten Reduktionsmittels unterstützt und andererseits eine Durchmischung des Reduktionsmittels mit dem Abgasstrom verbessert. Ein derartiger statischer Mischer repräsentiert dabei ein separates Bauteil, das in das Abgasrohr eingesetzt ist. Vorzugsweise kann ein derartiger statischer Mischer mehrere sternförmig angeordnete Leitschaufeln aufweisen, die insbesondere eine gleichgesinnte Anstellung gegenüber dem Abgasstrom besitzen, und wodurch der Abgasstrom bei der Durchströmung des Mischers mit einem Drall beaufschlagt wird. Die Leitschaufeln lassen sich geometrisch so anordnen, dass der durchströmbare Querschnitt des Abgasrohrs in der Axialrichtung, also in der Hauptströmungsrichtung blickdicht ist. Im Abgasstrom mitgeführte Flüssigkeitströpfchen treffen somit zwangsläufig auf die Leitschaufeln. Da diese durch den Abgasstrom aufgeheizt sind, bewirken die Leitschaufeln ein Verdampfen des darauf auftreffenden flüssigen Reduktionsmittels.

Die Integration eines derartigen Mischers in die Injektionseinrichtung vereinfacht die anschließende Montage der Injektionseinrichtung in die Abgasanlage. Beispielsweise wird die Injektionseinrichtung unmittelbar stromauf eines SCR-Katalysators in die Abgasanlage eingebaut, so dass das Austrittsende des Abgasrohrs direkt mit einem Eintrittsende des SCR-Katalysators verbunden wird.

Besonders vorteilhaft lässt sich gemäß einer Weiterbildung der Mischer in das zweischalige Abgasrohr einbauen. Hierzu kann vorgesehen sein, dass die beiden Schalen entlang von zwei sich gegenüberliegenden Verbindungsbereichen aneinander befestigt sind, wobei sich die beiden Verbindungsbereiche jeweils vom Eintrittsende des Abgasrohrs bis zum Austrittsende des Abgasrohrs erstrecken. Ferner kann nun der Mischer an seiner Außenseite zwei Eingriffsbereiche aufweisen, die jeweils in einen der Verbindungsbereiche eingreifen, zweckmäßig derart, dass der Mischer durch die Befestigung der beiden Schalen aneinander am Abgasrohr befestigt ist.

Vorzugsweise kann nun vorgesehen sein, dass die beiden Schalen entlang des jeweiligen Verbindungsbereichs mittels einer durchgehenden Schweißnaht aneinander befestigt sind, in welche der jeweilige Eingriffsbereich eingebunden ist. Durch diese Einbindung des jeweiligen Eingriffsbereichs in die Schweißnaht des zugehörigen Verbindungsbereichs ist letztlich der jeweilige Eingriffsbereich mittels der Schweißnaht an wenigstens einer der beiden Schalen, vorzugsweise an beiden Schalen, befestigt bzw. damit verschweißt.

Bei einer Ausführungsform kann der Stutzen am Abgasrohr so angeordnet sein, dass eine Längsmittelachse des Stutzens gegenüber einer radial zur Längsmittelachse des Abgasrohrs im Bereich der Stutzenöffnung verlaufenden Lotrichtung geneigt ist. Beispielsweise ist ein Neigungswinkel von 30° bis 60° denkbar. Das innere Ende des Stutzens und der Kragen lassen sich ohne Weiteres geometrisch an den jeweils gewünschten Neigungswinkel adaptieren, was die Montage des Stutzens am Abgasrohr vereinfacht.

Bei einer Ausführungsform kann das Abgasrohr wenigstens einen Bogen aufweisen, wobei die Stutzenöffnung dann axial fluchtend zu einem Austrittsende des Abgasrohrs angeordnet ist. Ferner kann der Stutzen optional gerade sein und koaxial zum Austrittsende des Abgasrohrs ausgerichtet sein. Das Vorsehen eines derartigen Bogens im Abgasrohr ermöglicht es, insbesondere in Verbindung mit einer geneigten Anordnung des Stutzens am Abgasrohr eine konzentrisch zur Längsmittelachse des Abgasrohrs orientierte Einspritzung des Reduktionsmittels zu erzeugen. Beispielsweise kann eine Einspritzrichtung des Injektors koaxial zur Längsmittelachse des Stutzens verlaufend und dementsprechend auch koaxial zum Austrittsende des Abgasrohrs ausgerichtet sein. Auf diese Weise wird erreicht, dass das eingedüste Reduktionsmittel einen möglichst großen Weg zurücklegt, bevor es auf die Wand des Abgasrohrs bzw. auf den Mischer auftrifft.

Bei einer vorteilhaften Ausführungsform kann das Abgasrohr einen ersten Bogen aufweisen, wobei die Stutzenöffnung dann axial fluchtend, insbesondere koaxial fluchtend, zu einem Austrittsende des Abgasrohrs angeordnet ist. Ferner kann das Abgasrohr stromauf des ersten Bogens einen zweiten Bogen aufweisen, wobei die Stutzenöffnung an einem zwischen dem ersten Bogen und dem zweiten Bogen ausgebildeten geraden Rohrabschnitt angeordnet ist. Das Anbringen des Stutzens an einem geraden Rohrabschnitt vereinfacht die Montage des Stutzens. Das Vorsehen von zwei Bögen im Abgasrohr vereinfacht dagegen die Montage der Injektionseinrichtung in der Abgasanlage.

Vorzugsweise können der erste Bogen und der zweite Bogen in einer gemeinsamen Längsmittelebene des Abgasrohrs liegen. Somit ergibt sich im Wesentlichen eine zweifache zweidimensionale Umlenkung des Abgasstroms, jedenfalls keine dreidimensionale Umlenkung.

Vorzugsweise können der erste Bogen und der zweite Bogen entgegengesetzte Krümmungen aufweisen. Hierdurch wird erreicht, dass ein Eintrittsende des Abgasrohrs und ein Austrittsende des Abgasrohrs nur einen vergleichsweise geringen Versatz besitzen, was die Integration der Einspritzeinrichtung in die Abgasanlage vereinfacht.

Entsprechend einer Weiterbildung können der erste Bogen und der zweite Bogen betragsmäßig im Wesentlichen gleiche Krümmungen aufweisen. In der Folge ist die Strömungsrichtung des Abgasstroms am Eintrittsende weitgehend parallel zur Strömungsrichtung des Abgasstroms im Austrittsende. Auch diese Maßnahme führt zu einer vereinfachten Integration der Injektionseinrichtung in die Abgasanlage.

Ein Verfahren zum Herstellen einer derartigen Injektionseinrichtung charakterisiert sich dadurch, dass der Stutzen von einer Innenseite der Wand durch die Stutzenöffnung durchgeführt wird bis ein am inneren Ende des Stutzens ausgebildeter, seitlich abstehender, vollständig umlaufender Kragen an der Innenseite der Wand an einem die Stutzenöffnung einfassenden Öffnungsrand anliegt. Ferner wird anschließend der Kragen mit der Wand verschweißt. Durch diese Bauweise wird erreicht, dass Druckbelastungen der Verbindung zwischen Stutzen und Abgasrohr formschlüssig zwischen Kragen und Öffnungsrand übertragen werden, ohne dass dadurch die Schweißverbindung zwischen Stutzen und Abgasrohr kritisch belastet wird.

Entsprechend einem vorteilhaften Beispiel kann der Kragen an der Innenseite der Wand mit der Wand verschweißt werden. Das bedeutet, dass die Schweißverbindung von innen, also vom Inneren des Abgasrohrs her ausgeführt wird. Auf diese Weise lässt sich das Herstellen einer hinreichend dichten Verbindung zwischen Kragen und Wand vereinfachen. Insbesondere stört bei dieser Vorgehensweise der Stutzen beim Anbringen der Schweißverbindung nicht.

Gemäß einem anderen Beispiel kann der Kragen mittels einer am Kragen vollständig umlaufenden Schweißnaht mit der Wand verschweißt werden. Eine derartige umlaufende Schweißnaht schafft die erforderliche Dichtigkeit zwischen Stutzen und Abgasrohr.

Gemäß einem Beispiel, bei welchem das Abgasrohr eine die Stutzenöffnung aufweisende erste Schale und eine zweite Schale besitzt, kann das Verfahren so durchgeführt werden, dass der Stutzen vor dem Anbringen der zweiten Schale an der ersten Schale in die Stutzenöffnung eingesetzt und mit der ersten Schale verschweißt wird. Die zweite Schale kann dann nach dem Verschweißen des Stutzens mit der ersten Schale an die erste Schale angebaut werden. Beispielsweise wird auch die zweite Schale mit der ersten Schale verschweißt, wobei entsprechende Schweißnähte vorzugsweise an einer Außenseite des Abgasrohrs angebracht werden. Bei fehlender zweiter Schale vereinfacht sich das Montieren des Stutzens, da die Innenseite des Abgasrohrs dadurch besonders gut zugänglich ist.

Entsprechend einem Beispiel kann vor dem Anbringen der zweiten Schale an der ersten Schale ein statischer Mischer im Bereich eines Austrittsendes des Abgasrohrs in die erste Schale oder in die zweite Schale eingesetzt werden. Zum vereinfachten Fixieren des Mischers am Abgasrohr kann der Mischer zwei radial abstehende Eingriffsabschnitte aufweisen, die in die Verbindung zwischen erster Schale und zweiter Schale eingreifen, so dass durch die Fixierung der ersten Schale an der zweiten Schale gleichzeitig auch der Mischer am Abgasrohr fixiert wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte, schaltplanartige Prinzipdarstellung einer Brennkraftmaschine mit Abgasanlage, die eine Injektionseinrichtung enthält,
- Fig. 2: eine isometrische Ansicht der Abgasanlage im Bereich der Injektionseinrichtung, wobei ein Abgasrohr der Injektionseinrichtung transparent dargestellt ist,
- Fig. 3: eine isometrische Explosionsdarstellung der Injektionseinrichtung.

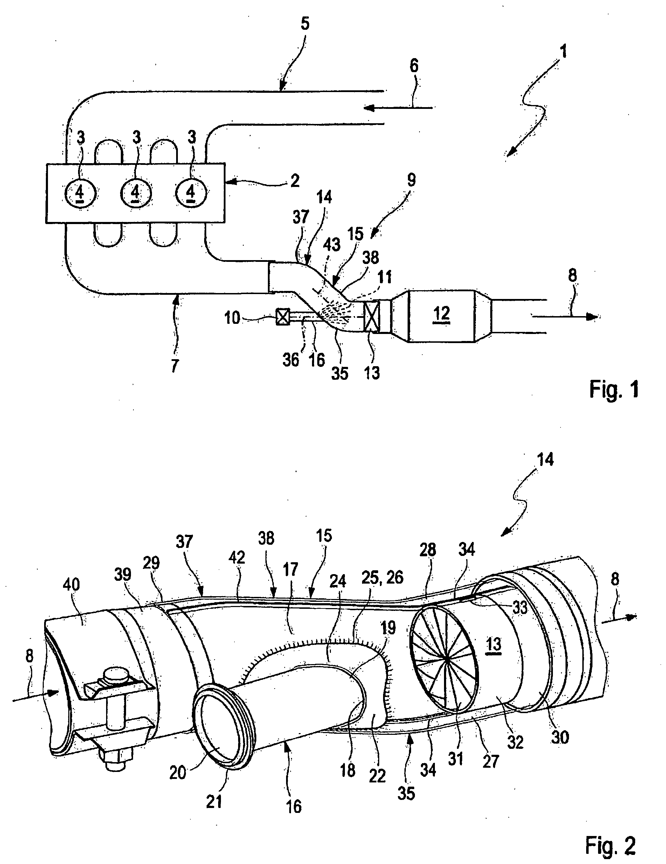

Entsprechend Figur 1 umfasst eine Brennkraftmaschine 1, die bevorzugt in einem Kraftfahrzeug zur Anwendung kommen kann, einen Motorblock 2, der in mehreren Zylindern 3 je einen Brennraum 4 enthält. In den Zylindern 3 sind hier nicht gezeigte Kolben hubverstellbar gelagert. Eine Frischluftanlage 5 dient zum Zuführen von Frischluft zu den Brennräumen 4. Ein entsprechender Frischluftstrom 6 ist in Figur 1 durch einen Pfeil angedeutet. Eine Abgasanlage 7 dient zum Abführen von Abgas von den Brennräumen 4. Ein entsprechender Abgasstrom 8 ist in Figur 1 durch einen Pfeil angedeutet. Die Abgasanlage 7 kann mit einem SCR-System 9 ausgestattet sein, das einen Injektor 10 zum Einbringen eines Reduktionsmittels 11 in den Abgasstrom 8 sowie einen SCR-Katalysator 12 umfasst. Optional kann außerdem ein statischer Mischer 13 vorgesehen sein, der bezüglich der Strömungsrichtung des Abgasstroms 8 zwischen dem Injektor 10 und dem SCR-Katalysator 12 angeordnet ist. Beim hier gezeigten SCR-System 9 ist eine Injektionseinrichtung 14 vorgesehen, die ein Abgasrohr 15 zum Einbau der Injektionseinrichtung 14 in die Abgasanlage 7 sowie einen Stutzen 16 zum Anschließen des Injektors 10 aufweist. Beim hier gezeigten Beispiel ist außerdem der Mischer 13 ein Bestandteil der Injektionseinrichtung 14.

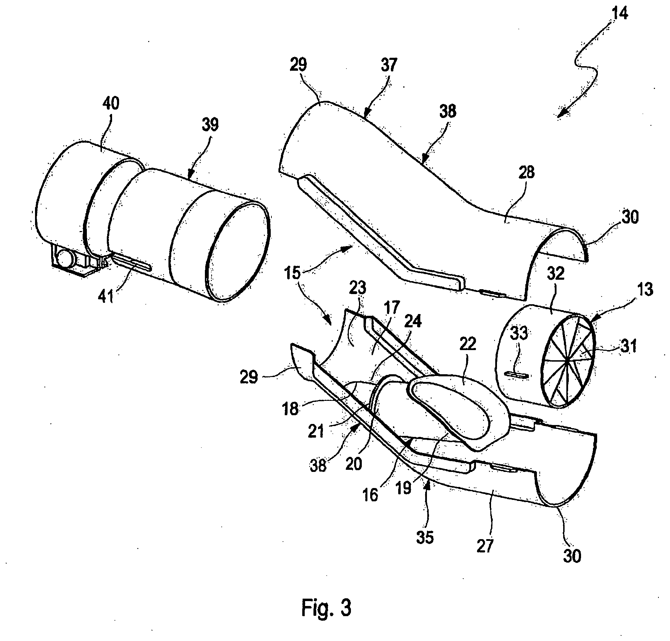

Entsprechend den Figuren 2 und 3 umfasst die Injektionseinrichtung 14 das Abgasrohr 15 zum Führen des Abgasstroms 8. Eine Wand 17 des Abgasrohrs 15 weist eine Stutzenöffnung 18 auf. Die Wand 17 begrenzt einen vom Abgasstrom 8 durchströmbaren Querschnitt des Abgasrohrs 15 radial. Der Stutzen 16 ist mit einem inneren Ende 19 in die Stutzenöffnung 18 eingesetzt und ist an einem äußeren Ende 20 zum Anschließen des Injektors 10 ausgestaltet. Im Beispiel der Figuren 2 und 3 ist am äußeren Ende 20 ein entsprechendes Anschlussstück 21 angeordnet, das das Anschließen des Injektors 10 vereinfacht. Das Anschlussstück 21 kann bezüglich des Stutzens 16 ein separates Bauteil sein, das an den Stutzen 16 angebaut ist und insbesondere damit verschweißt oder verlötet ist. Ebenso ist eine Schraubverbindung denkbar.

Der Stutzen 16 weist an seinem inneren Ende 19 einen Kragen 22 auf, der vom Stutzen 16 seitlich absteht und in einer Umfangsrichtung des Stutzens 16 vollständig umläuft. Der Kragen 22 ist an einer in Figur 3 einsehbaren Innenseite 23 der Wand 17 an einem Öffnungsrand 24 angeordnet, der die Stutzenöffnung 18 einfasst. Des Weiteren ist der Kragen 22 mit der Wand 17 verschweißt. Eine entsprechende Schweißverbindung 25 ist in Figur 2 angedeutet. Die Schweißverbindung 25 kann dabei zweckmäßig als geschlossen umlaufende Schweißnaht 26 ausgestaltet sein. Die Schweißnaht 26 befindet sich dabei an der Innenseite 23 der Wand 17.

Das Abgasrohr 15 besteht im gezeigten Beispiel aus einer ersten Schale 27 und einer zweiten Schale 28. Beide Schalen 27, 28 erstrecken sich jeweils von einem Eintrittsende 29 des Abgasrohrs 15 bis zu einem Austrittsende 30 des Abgasrohrs 15. Die Stutzenöffnung 18 ist dabei an der ersten Schale 27 ausgebildet, so dass der Stutzen 16 ausschließlich an der ersten Schale 27 befestigt ist.

Im Beispiel umfasst die Injektionseinrichtung 14 außerdem den statischen Mischer 13, der hierzu im Bereich des Austrittsendes 30 in das Abgasrohr 15 eingesetzt ist. Der Mischer 13 ist dabei ein bezüglich des Abgasrohrs 15 separates Bauteil. Der Mischer 13 besitzt mehrere turbinenartig angeordnete Leitschaufeln 31 sowie einen ringförmigen Mantelkörper 32, der die Leitschaufeln 31 radial außen in der Umfangsrichtung des Musters 13 vollständig umschließt. Am Mantel 32 sind zwei diametral gegenüberliegende Eingriffsbereiche 33 ausgebildet, die an der jeweiligen Seite in einen Verbindungsbereich 34 zwischen den beiden Schalen 27, 28 eingreifen. Durch das Festlegen der beiden Schalen 27, 28 aneinander wird somit auch der Mischer 13 am Abgasrohr 15 festgelegt. Beispielsweise sind die beiden Schalen 27, 28 im jeweiligen Verbindungsbereich 34 miteinander verschweißt. Eine zugehörige Schweißnaht ist in Fig. 2 mit 42 bezeichnet. Je eine solche Schweißnaht 42 erstreckt sich an einander gegenüberliegenden Seiten des Abgasrohrs 15 jeweils entlang des jeweiligen Verbindungsbereichs 34.

Das Abgasrohr 15 weist einen ersten Bogen 35 auf. Die Stutzenöffnung 18 ist axial fluchtend zum Austrittsende 30 des Abgasrohrs 15 angeordnet. Ferner ist der Stutzen 16 als gerades Rohr ausgestaltet und koaxial zum Austrittsende 30 ausgerichtet. Eine in Figur 1 angedeutete Axialrichtung 36 erstreckt sich somit konzentrisch durch den Stutzen 16 und im Bereich des Austrittsendes 30 durch das Abgasrohr 15. Der Injektor 10 kann nun das Reduktionsmittel 11 ebenfalls konzentrisch zu dieser Axialrichtung 36 in den Abgasstrom 8 einbringen.

Das Abgasrohr 15 weist hier außerdem einen zweiten Bogen 37 auf sowie einen zwischen dem ersten Bogen 35 und dem zweiten Bogen 37 ausgebildeten geraden Rohrabschnitt 38. An diesem geraden Rohrabschnitt 38 ist die Stutzenöffnung 18 angeordnet. Beim hier gezeigten bevorzugten Beispiel liegen der ersten Bogen 35 und der zweite Bogen 37 in einer gemeinsamen Längsmittelebene des Abgasrohrs 15, die in Figur 1 der Zeichnungsebene entspricht. Ferner besitzen der erste Bogen 35 und der zweite Bogen 37 entgegengesetzte Krümmungen. Beispielsweise beschreibt in Figur 1 in der Strömungsrichtung des Abgasstroms 8 gesehen der zweite Bogen 37 eine Rechtskurve, während der nachfolgende erste Bogen 35 eine Linkskurve beschreibt. Ferner kann vorgesehen sein, dass der erste Bogen 35 und der zweite Bogen 37 betragsmäßig im Wesentlichen gleiche Krümmungen aufweisen. In der Folge ist eine eintrittsseitige Längsmittelachse des Abgasrohrs 15, die im Eintrittsende 29 vorliegt, im Wesentlichen parallel orientiert zu einer austrittsseitigen Längsmittelachse des Abgasrohrs 15, die im Austrittsende 30 vorliegt.

Bevorzugt ist der Stutzen 16 am Abgasrohr 15 so angeordnet, dass seine Längsmittelachse 36, die im Folgenden auch als Stutzenlängsmittelachse 36 bezeichnet werden kann, gegenüber einer Lotrichtung geneigt ist, die radial zu einer in Fig. 1 angedeuteten Längsmittelachse 43 verläuft, die das Abgasrohr 15 im Bereich der Stutzenöffnung 18 aufweist und die im Folgenden auch als Rohrlängsmittelachse 43 bezeichnet werden kann. Diese Neigung zwischen der Stutzenlängsmittelachse 36 und der Rohrlängsmittelachse 43 bzw. deren Lotrichtung beträgt im gezeigten Beispiel etwa 45°.

Dabei können die Krümmungen der beiden Bogen 35, 37 gleich groß sein oder im Wesentlichen gleich groß sein, also Abweichungen von maximal 20 % und vorzugsweise von maximal 10 % bei ihren Krümmungsradien besitzen.

Wie sich den Figuren 2 und 3 ferner entnehmen lässt, kann die Injektionseinrichtung 14 außerdem ein Anschlussrohr 39 aufweisen, das auf geeignete Weise fest mit dem Abgasrohr 15 verbunden ist und das mittels einer Schelle 40 an eine benachbarte Komponente der Abgasanlage 7 anschließbar ist. Hierzu kann das Anschlussrohr 29 an einem vom Abgasrohr 15 abgewandten Ende seitlich geschlitzt sein. Ein entsprechender Schlitz 41 ist in Figur 3 erkennbar.

Die Herstellung der Injektionseinrichtung 14 kann wie folgt ablaufen:
Zunächst wird der Stutzen 16 von der Innenseite 23 der Wand 17 durch die Stutzenöffnung 18 durchgeführt, und zwar so weit bis der am inneren Ende 19 vorgesehene Kragen 22 an der Innenseite 23 der Wand 17 am Öffnungsrand 24 anliegt. Bei der hier vorgestellten zweischaligen Bauweise des Abgasrohrs 15 erfolgt das Einsetzen des Stutzens 16 in die Stutzenöffnung 18 bei offenem Abgasrohr 15, also befehlender zweiter Schale 28. Vor dem Anbringen der zweiten Schale 28 wird der Kragen 22 mit der Wand 17 verschweißt. Die Schweißverbindung 25 wird dabei an der Innenseite 23 erzeugt. Bevorzugt wird die Schweißnaht 26 am Kragen 22 vollständig umlaufend erzeugt. Nach dem Verschweißen des Stutzens 16 mit der ersten Schale 27 kann der optional vorhandene Mischer 13 in die erste Schale 27 oder in die zweite Schale 28 eingesetzt werden. Anschließend wird die zweite Schale 28 an die erste Schale 27 angebaut. Zweckmäßig werden die beiden sich diametral gegenüberliegenden Verbindungsbereiche 34, die sich jeweils vom Eintrittsende 29 bis zum Austrittsende 30 des Abgasrohrs 15 erstrecken, miteinander verschweißt.

Nach dem Anbringen der zweiten Schale 28 an die erste Schale 27 und vor oder nach dem Verschweißen der beiden Schalen 27, 28 kann das Anschlussrohr 39 an das Abgasrohr 15 angeschlossen werden. Beispielsweise lässt sich das Anschlussrohr 39 in das Eintrittsende 29 des Abgasrohrs 15 axial einstecken und damit verschweißen.

## Patentansprüche

1. Injektionseinrichtung zum Einbringen eines Reduktionsmittels (11) in einen Abgasstrom (8) einer Abgasanlage (7) einer Brennkraftmaschine (1),
- mit einem Abgasrohr (15) zum Führen des Abgasstroms (8), das in einer Wand (17) eine Stutzenöffnung (18) aufweist,
- mit einem Stutzen (16), der mit einem inneren Ende (19) in die Stutzenöffnung (18) eingesetzt ist, wobei an einem äußeren Ende (20) des Stutzens (16) ein Injektor (10) angeschlossen ist,
**dadurch gekennzeichnet,**
**dass** der Stutzen (16) an seinem inneren Ende (19) einen seitlich abstehenden, vollständig umlaufenden Kragen (22) aufweist, der an einer Innenseite (23) der Wand (17) an einem die Stutzenöffnung (18) einfassenden Öffnungsrand (24) anliegt und der mit der Wand (17) verschweißt ist, und
**dass** das Abgasrohr (15) aus einer ersten Schale (27) und einer zweiten Schale (28) zusammengebaut ist, die sich jeweils von einem Eintrittsende (29) des Abgasrohrs (15) bis zu einem Austrittsende (30) des Abgasrohrs (15) erstrecken, wobei nur die erste Schale (27) die Stutzenöffnung (18) enthält und mit dem Stutzen (16) verschweißt ist.

2. Einrichtung nach Anspruch 1,
**dadurch gekennzeichnet,**
**dass** der Kragen (22) mit der Wand (17) mittels einer am Kragen (22) geschlossen umlaufenden Schweißnaht (26) verschweißt ist, die sich an der Innenseite (23) der Wand (17) befindet.

3. Einrichtung nach einem der Ansprüche 1 bis 2,
**dadurch gekennzeichnet,**
**dass** in das Abgasrohr (15) im Bereich eines Austrittsendes (30) des Abgasrohrs (15) ein statischer Mischer (13) eingesetzt ist.

4. Einrichtung nach Anspruch 3,
**dadurch gekennzeichnet.**
- **dass** die beiden Schalen (27, 28) entlang von zwei sich gegenüberliegenden Verbindungsbereichen (34) aneinander befestigt sind,
- **dass** der Mischer (13) an seiner Außenseite zwei Eingriffsbereiche (33) aufweist, die jeweils in einen der Verbindungsbereiche (34) eingreifen, so dass der Mischer (13) durch die Befestigung der beiden Schalen (27, 28) aneinander am Abgasrohr (15) befestigt ist.

5. Einrichtung nach Anspruch 4,
**dadurch gekennzeichnet,**
**dass** die beiden Schalen (27, 28) entlang des jeweiligen Verbindungsbereichs (34) mittels einer schweißnaht (42) aneinander befestigt sind, in welche der jeweilige Eingriffsbereich (33) eingebunden ist, derart, dass der jeweilige Eingriffsbereich mittels der Schweißnaht (42) an wenigstens einer der beiden Schalen (27, 28) befestigt ist.

6. Einrichtung nach einem der Ansprüche 1 bis 5,
**dadurch gekennzeichnet,**
**dass** der Stutzen (16) am Abgasrohr (15) so angeordnet ist, dass eine Längsmittelachse (36) des Stutzens (16) gegenüber einer radial zur Längsmittelachse (43) des Abgasrohrs (15) im Bereich der Stutzenöffnung (18) verlaufenden Lotrichtung geneigt ist.

7. Einrichtung nach einem der Ansprüche 1 bis 6,
**dadurch gekennzeichnet,**
- **dass** das Abgasrohr (15) wenigstens einen Bogen (27) aufweist,
- **dass** die Stutzenöffnung (18) axial fluchtend zu einem Austrittsende (30) des Abgasrohrs (15) angeordnet ist,
- **dass** der Stutzen (16) gerade ist und koaxial zum Austrittsende (30) des Abgasrohrs (15) ausgerichtet ist.

8. Einrichtung nach einem der Ansprüche 1 bis 7,
**dadurch gekennzeichnet,**
- **dass** das Abgasrohr (15) einen ersten Bogen (35) aufweist,
- **dass** die Stutzenöffnung (18) axial fluchtend zu einem Austrittsende (30) des Abgasrohrs (15) angeordnet ist,
- **dass** das Abgasrohr (15) einen zweiten Bögen (37) aufweist,
- **dass** die Stutzenöffnung (18) an einem zwischen dem ersten Bogen (35) und dem zweiten Bogen (37) ausgebildeten, geraden Rohrabschnitt (38) angeordnet ist.

9. Einrichtung nach Anspruch 8,
**dadurch gekennzeichnet,**
- **dass** der erste Bogen (35) und der zweite Bogen (37) in einer gemeinsamen Langsmittelebene des abgasrohrs (15) liegen, und/oder
- **dass** der erste Bogen (35) und der zweite Bogen (37) entgegengesetzte Krümmungen aufweisen, und/oder
- **dass** der erste Bogen (35) und der zweite Bogen (37) betragsmäßig im Wesentlichen gleiche Krümmungen aufweisen.

## Claims

1. Injection device for inserting a reducing agent (11) into an exhaust gas flow (8) of an exhaust system (7) of a combustion engine (1),
- with an exhaust pipe (15) for guiding the exhaust gas flow (8) comprising a connecting piece opening (18) in a wall (17),
- with a connecting piece (16) which is inserted into the connecting piece opening (18) with an inner end (19) wherein an injector (10) is connected to an outer end (20) of the connecting piece (16),
**characterized in that**
the connecting piece (16) comprises at its inner end (19) a laterally protruding, completely circumferential collar (22) which abuts at an inner side (23) of the wall (17) at an opening border (24) enclosing the connecting piece opening (18) and which is welded to the wall (17), and
that the exhaust pipe (15) is assembled using a first shell (27) and a second shell (28), each extending from an inlet end (29) of the exhaust pipe (15) to an outlet end (30) of the exhaust pipe (15), wherein only the first shell (27) comprises the connecting piece opening (18) and is welded to the connecting piece (16).

2. Device according to claim 1,
**characterized in that**
the collar (22) is welded to the wall (17) by means of a weld seam (26) completely circumferential at the collar (22), situated at the inner side (23) of the wall (17).

3. Device according to one of claims 1 to 2,
**characterized in that**
a static mixer (13) is inserted into the exhaust pipe (15) in the region of an outlet end (30) of the exhaust pipe (15).

4. Device according to claim 3,
**characterized in that**
- the two shells (27, 28) are attached to each other along two opposed connecting areas (34),
- the mixer (13) comprises two engagement areas (33) at its outside, each engaging one of the connecting areas (34) so that the mixer (13) is attached to the exhaust pipe (15) by the mutual attachment of the two shells (27, 28).

5. Device according to claim 4,
**characterized in that**
the two shells (27, 28) are attached to each other along the respective connecting area (34) by means of a weld seam (42), into which the respective engagement area (33) is integrated so that the respective engagement area is attached to at least one of the two shells (27, 28) by means of the weld seam (42).

6. Device according to one of claims 1 to 5,
**characterized in that**
the connecting piece (16) is arranged at the exhaust pipe (15) so that a longitudinal centre axis (36) of the connecting piece (16) is inclined in relation to a vertical direction radial to the longitudinal centre axis (43) of the exhaust pipe (15) in the region of the connecting piece opening (18).

7. Device according to one of claims 1 to 6,
**characterized in that**
- the exhaust pipe (15) comprises at least one bend (27),
- the connecting piece opening (18) is arranged axially flush to an outlet end (30) of the exhaust pipe (15),
- the connecting piece (16) is straight and is coaxially aligned to the outlet end (30) of the exhaust pipe (15).

8. Device according to one of claims 1 to 7,
**characterized in that**
- the exhaust pipe (15) comprises a first bend (35),
- the connecting piece opening (18) is arranged axially flush to an outlet end (30) of the exhaust pipe (15),
- the exhaust pipe (15) comprises a second bend (37),
- the connecting piece opening (18) is formed at a straight pipe section (38) arranged between the first bend (35) and the second bend (37).

9. Device according to claim 8,
**characterized in that**
- the first bend (35) and the second bend (37) are situated in a common longitudinal centre plane of the exhaust pipe (15), and/or
- the first bend (35) and the second bend (37) have opposed curvatures, and/or
- the first bend (35) and the second bend (37) have essentially the same curvature in amount.

## Revendications

1. Dispositif d'injection pour introduire un agent réducteur (11) dans un courant de gaz d'échappement (8) d'un système d'échappement (7) d'un moteur à combustion (1),
- avec un tuyau d'échappement (15) pour guider le courant de gaz d'échappement (8) comprenant une ouverture de raccord (18) dans une paroi (17),
- avec un raccord (16) qui est introduit dans l'ouverture de raccord (18) avec une extrémité interne (19) où un injecteur (10) est connecté à une extrémité externe (20) du raccord (16),
**caractérisé en ce que**
le raccord (16) comprend à son extrémité interne (19) un col entièrement périphérique (22) faisant saillie latéralement, qui, à une face interne (23) de la paroi (17), est en butée contre un bord d'ouverture (24) entourant l'ouverture de raccord (18) et qui est soudé à la paroi (17), et
que le tuyau d'échappement (15) est assemblé en utilisant une première coque (27) et une deuxième coque (28) s'étendant d'une extrémité d'entrée (29) du tuyau d'échappement (15) à une extrémité de sortie (30) du tuyau d'échappement (15), où seulement la première coque (27) comprend l'ouverture de raccord (18) et est soudée au raccord (16).

2. Dispositif selon la revendication 1,
**caractérisé en ce que**
le col (22) est soudé à la paroi (17) par une soudure (26) entièrement périphérique au col (22) située à la face interne (23) de la paroi (17).

3. Dispositif selon une des revendications 1 à 2,
**caractérisé en ce que**
un mélangeur statique (13) est intégré dans le tuyau d'échappement (15) dans la région d'une extrémité de sortie (30) du tuyau d'échappement (15).

4. Dispositif selon la revendication 3,
**caractérisé en ce que**
- les deux coques (27, 28) sont attachées l'une à l'autre le long de deux régions de liaison (34) opposées,
- le mélangeur (13) comprend deux régions d'engagement (33) à sa face externe, chacune engageant une des régions de liaison (34) de sorte que le mélangeur (13) est attaché au tuyau d'échappement (15) par l'attachement des deux coques (27, 28) l'une à l'autre.

5. Dispositif selon la revendication 4,
**caractérisé en ce que**
les deux coques (27, 28) sont attachées l'une à l'autre le long de la région de liaison (34) respective par une soudure (42) dans laquelle la région d'engagement (33) respective est intégrée de sorte que la région d'engagement respective est attachée à au moins une des deux coques (27, 28) par la soudure (42).

6. Dispositif selon une des revendications 1 à 5,
**caractérisé en ce que**
le raccord (16) est arrangé au tuyau d'échappement (15) de sorte qu'un axe médian longitudinal (36) du raccord (16) est incliné par rapport à une verticale, radiale à l'axe médian longitudinal (43) du tuyau d'échappement (15) dans la région de l'ouverture de raccord (18).

7. Dispositif selon une des revendications 1 à 6,
**caractérisé en ce que**
- le tuyau d'échappement (15) comprend au moins un coude (27),
- l'ouverture de raccord (18) est arrangée en alignement axial par rapport à une extrémité de sortie (30) du tuyau d'échappement (15),
- le raccord (16) est droit et est aligné de manière coaxiale par rapport à l'extrémité de sortie (30) du tuyau d'échappement (15).

8. Dispositif selon une des revendications 1 à 7,
**caractérisé en ce que**
- le tuyau d'échappement (15) comprend un premier coude (35),
- l'ouverture de raccord (18) est arrangée en alignement axial par rapport à une extrémité de sortie (30) du tuyau d'échappement (15),
- le tuyau d'échappement (15) comprend un deuxième coude (37),
- l'ouverture de raccord (18) est arrangée à une section de tuyau droite (38) formée entre le premier coude (35) et le deuxième coude (37).

9. Dispositif selon la revendication 8,
**caractérisé en ce que**
- le premier coude (35) et le deuxième coude (37) sont situés dans un plan médian longitudinal commun du tuyau d'échappement (15), et/ou
- le premier coude (35) et le deuxième coude (37) ont des courbures opposées, et/ou
- le premier coude (35) et le deuxième coude (37) ont essentiellement les mêmes courbures en valeur.
